(19) Europäisches Patentamt
European Patent Office
Office européen des brevets

(11) **EP 4 184 855 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **22020572.8**

(22) Anmeldetag: **22.11.2022**

(51) Internationale Patentklassifikation (IPC):
**H04L 9/00** *(2022.01)* **H04L 9/30** *(2006.01)*

(52) Gemeinsame Patentklassifikation (CPC):
**H04L 9/002; H04L 9/3093;** H04L 2209/04; H04L 2209/08

(54) **MASKIERTES GITTERBASIERTES KRYPTOGRAPHISCHES VERFAHREN**

MASKED GRATING-BASED CRYPTOGRAPHIC METHOD

PROCÉDÉ CRYPTOGRAPHIQUE MASQUÉ À BASE DE RÉSEAU

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **23.11.2021 DE 102021005813**

(43) Veröffentlichungstag der Anmeldung:
**24.05.2023 Patentblatt 2023/21**

(73) Patentinhaber: **Giesecke+Devrient ePayments GmbH**
**81677 München (DE)**

(72) Erfinder: **Bauer, Sven**
**85591 Vaterstetten (DE)**

(74) Vertreter: **Giesecke+Devrient IP**
**Prinzregentenstraße 161**
**81677 München (DE)**

(56) Entgegenhaltungen:
DE-A1- 102018 108 313

- CHOI PILJOO ET AL: "Fast and Power-Analysis Resistant Ring Lizard Crypto-Processor Based on the Sparse Ternary Property", IEEE ACCESS, vol. 7, 16 July 2019 (2019-07-16), pages 98684 - 98693, XP011737988, DOI: 10.1109/ ACCESS.2019.2929299

**Beschreibung**

Gebiet der Erfindung

Die Erfindung betrifft ein maskiertes gitterbasiertes kryptographisches Verfahren, und eine Recheneinrichtung mit einer Implementierung eines solchen Verfahrens.

Stand der Technik

Viele Gitter-basierte kryptographische Verfahren arbeiten mit Polynomen vom Grad 200 oder höher. Derartige Polynome müssen im Laufe der Berechnungen miteinander multipliziert werden. Um diese Multiplikation effizient berechnen zu können verwenden viele Verfahren die "Number Theoretic Transform", oder kurz NTT, oder diskrete Fourier-Transformation über einem endlichen Körper. Hierbei werden die zu multiplizierenden Polynome mithilfe der NTT in zwei Vektoren transformiert, diese Vektoren komponentenweise miteinander multipliziert und der Ergebnisvektor mit einer inversen NTT, NTT$^{-1}$, wieder zurück transformiert. Beispiele findet man in den Spezifikationen der Schlüsselaustauschverfahren Kyber ([2], S. 8,9), New Hope ([1], S. 7) und des Signaturverfahrens Dilithium ([3], S. 13).

Implementierungen kryptographischer Verfahren können anfällig gegen Seitenkanalangriffe sein. Bei Seitenkanalangriffen wird versucht, aus Messungen physikalischer Parameter an einem Gerät während der Ausführung eines kryptographischen Verfahrens Rückschlüsse auf verarbeitete geheime Daten zu ziehen. Beispiele für typische physikalische Parameter, die für derartige Angriffe genutzt werden, sind Laufzeit, Stromaufnahme oder elektromagnetische Abstrahlung. Aufbauend auf der grundlegenden Arbeit [7] gibt es hierzu zahlreiche Veröffentlichungen.

Eine bekannte Maßnahme, um Implementierungen gegen Seitenkanalangriffe zu schützen, ist die Maskierung von Zwischenergebnissen, die beispielsweise im Dokument [4] beschrieben ist ([4], S. 163).

Dokument [2], Seite 9, Algorithmus 6, beschreibt ein Verfahren zur Entschlüsselung eines Ciphertext mittels eines geheimen Schlüssels (secret key) sk, um als Ausgabe eine Message m zu erzeugen. Der geheime Schlüssel sk wird dabei in Form einer Schlüssel-Matrix $\hat{s}^T$ angewandt. Algorithmus 6 umfasst, nach vorbereitenden Schritten 1-3, in denen aus dem Ciphertext die Werte u und v abgeleitet werden, einen Schritt 4, in welchem die Message m gewonnen wird. Im folgenden zentralen Message-Gewinnungs-Schritt (1) von Schritt 4 wird der geheime Schlüssel sk in Darstellung als Schlüssel-Matrix, $\hat{s}^T$, auf die beiden aus dem Ciphertext abgeleiteten Werte v und u angewandt:

$$(1) \qquad v - NTT^{-1}\left(\hat{s}^T \circ NTT(u)\right)$$

Hierbei steht ° für komponentenweise Multiplikation. In dem Message-Gewinnungs-Schritt (1) wird der aus dem Ciphertext gewonnene Wert u einer NTT unterzogen um einen u entsprechenden Vektor NTT(u) zu erzeugen. Der erzeugte Vektor NTT(u) wird mit der Schlüsselmatrix $\hat{s}^T$ komponentenweise multipliziert. Das Ergebnis dieser komponentenweisen Multiplikation wird mit der inversen NTT, NTT$^{-1}$, wieder zurück transformiert. Das Ergebnis der Rücktransformation wird mit dem anderen aus dem Ciphertext gewonnenen Wert, v, kombiniert.

In der Schreibweise aus Dokument [2] kann der geheime Schlüssel (in Matrixdarstellung) $\hat{s}^T$ durch folgendes Verfahren maskiert werden:

(Algorithmus 1)

1. Wähle $r \in R_q$ zufällig.

2. Setze $u' = u + r$.

3. Setze $w := v - NTT^{-1}\left(\hat{s}^T \circ NTT(u')\right)$

4. Setze $c := NTT^{-1}\left(\hat{s}^T \circ r\right)$

5. Setze $w' := w - c$.

Hierin ist der Wert r in Schritt 1 eine zufällig ausgewählte Zufallszahl. In Schritt 2 wird der aus dem Ciphertext abgeleitete Wert u durch einen mit der Zufallszahl r maskierten Wert u' ersetzt. In Schritt 3 wird der dem obigen Message-Gewinnungs-Schritt (1) entsprechende maskierte Message-Gewinnungs-Schritt auf den maskierten Wert u' aus Schritt 2 angewandt, und hierdurch die mit r maskierte entschlüsselte Message w gewonnen. In Schritt 4 wird ein Hilfswert c berechnet, der benötigt wird, um die Maskierung des Werts u in Schritt c wieder zu kompensieren. In Schritt 5 wird der Hilfswert c aus Schritt 4 auf das Ergebnis w des maskierten Message-Gewinnungs-Schritts 3 angewandt, und hierdurch die entschlüsselte (nicht-maskierte) Message w' gewonnen.

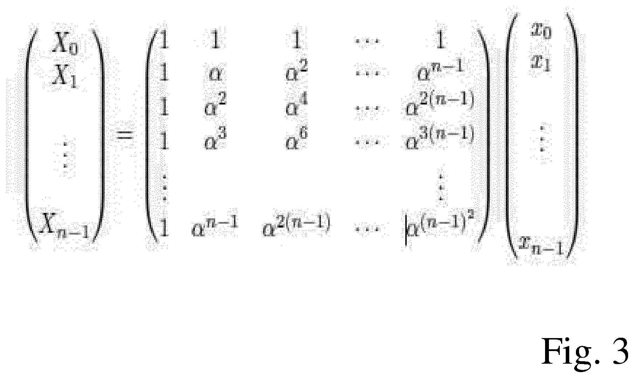

Fig. 3 zeigt die Multiplikation eines Eingangs-Vektors (x0, x1, ...xn-1) mit einer Matrix $\hat{\alpha}^T$, um einen Ausgangs-Vektor (X0, X1, ...Xn-1) zu erzeugen.

Die NTT aus dem obigen Algorithmus 1 ist rechnerisch eine komponentenweise Matrixmultiplikation des maskierten Vektors NTT(u') mit der Schlüsselmatrix $\hat{s}^T$, wie die in Fig. 3 gezeigte, wobei der Vektor NTT(u') aus Algorithmus 1 dem Vektor x aus Fig. 3 entspricht, und die Schlüsselmatrix $\hat{s}^T$ aus Algorithmus 1 der Matrix $\hat{\alpha}^T$ aus Fig. 3 entspricht.

Der maskierte Vektor NTT(u') ist eine Konkatenation von Elementen des Werte u, der aus dem Ciphertext abgeleitet ist, und zur Maskierung verwendeten Zufallswerten r. Der Vektor NTT(u') hat also die Gestalt NTT(u') = (u0, u1, ...un-1, r0, r1, ...rn-1). Durch die zusätzlichen Vektorelemente r0, r1, ... rn-1, die auf die zur Maskierung verwendete Zufallszahl r zurückgehen, erfordert der maskierte Message-Gewinnungsschritt, und damit die maskierte Entschlüsselung, einen erheblich höheren Rechenaufwand als der nicht maskierte Message-Gewinnungsschritt, und die nicht maskierte Entschlüsselung.

Eine direkte Anwendung der Maskierung mit r zum Schutz der Implementierung des kryptographischen Verfahrens hat daher eine große Auswirkungen auf die Laufzeit des kryptographischen Verfahrens.

In konkreten Anwendungen, in denen das kryptographische Verfahren bestimmte Laufzeitgrenzen einhalten muss, kann die Maskierung dazu führen, dass die Laufzeitgrenze verletzt wird.

Beispielsweise muss bei einer Zahlungsverkehrstransaktion das kryptographische Verfahren zur Authentisierung der Zahlungsverkehrstransaktion seine Berechnung innerhalb der vorgeschriebenen Laufzeitgrenzen abgeschlossen haben, ansonsten schlägt die Authentisierung und damit die Zahlungsverkehrstransaktion fehl. Ähnliche Laufzeitgrenzen können bei Authentisierungen von Identifikationsdokumenten festgesetzt sein.

Ein Verzicht auf die Maskierung des kryptographischen Verfahrens zugunsten der Laufzeit bedeutet wiederum ein Sicherheitsrisiko.

Praktische Anwendung finden kryptographische Verfahren, die Laufzeitbeschränkungen und Sicherheitsvorgaben vereinen müssen, beispielsweise in Teilnehmeridentitätsmodulen (englisch: Subscriber Identity Module SIM) in eUICCs in mobilen Endgeräten, in Zahlungsverkehrskarten mit Chip, und in Identifikationsdokumenten wird Reisepässen mit Chip und ID-Karten, sowie Gesundheitssystemdokumente (wie z.B. Krankenversichertenkarten oder Heilberufsausweise). Als mobiles Endgerät wird ein Gerät verstanden, das mit einem eUICC betrieben wird, und eingerichtet ist, mit dem eUICC in einem mobilen Netzwerk zu kommunizieren, wohingegen das Gerät nicht physische mobil sein muss. Beispiele für mobile Endgeräte sind Mobiltelefone und Automotive-Telematikgeräte. Die in mobilen Endgeräten betriebenen eUICCs können unterschiedliche Formfaktoren, beispielsweise Plug-In-SIM-Karte, eingelötetes oder einlötbares embedded eUICC, oder in das Chipset des mobilen Endgeräts integriertes integrated iUICC.

Das Dokument [8] DE102018108313A1 aus dem Stand der Technik offenbart ein Verfahren zum Verschleiern eines Polynoms durch Multiplikation des Polynoms mit einem Blend-Polynom, das nur spärlich besetzt ist.

Das Dokument [9] "Fast and Power-Analysis Resistant Ring Lizard Crypto-Processor Based on the Sparse Ternary Property", P. Choi et al, IEEE Access, 7. August 2019, offenbart eine Krypto-Prozessor-Lösung, die auf dem quanten-resistenten PKI-Kryptosystem Ring Lizard aufsetzt, welches spärlich besetzte Polynome einsetzt.

Zusammenfassung der Erfindung

Der Erfindung liegt die Aufgabe zu Grunde, ein laufzeitverbessertes und zugleich sicheres maskiertes gitterbasiertes kryptographisches Verfahren zur Verschlüsselung oder Entschlüsselung von Daten mit einem Schlüssel zu schaffen.

Die Aufgabe wird gelöst durch ein Verfahren zur Maskierung eines gitterbasierten kryptographischen Verfahrens nach Anspruch 1. Vorteilhafte Ausgestaltungen der Erfindung sind in den abhängigen Ansprüchen angegeben.

Das erfindungsgemäße Verfahren nach Anspruch 1 ist zur Verschlüsselung oder Entschlüsselung von Daten mit einem Schlüssel s eingerichtet. Das Verfahren umfasst eine Multiplikation eines Eingabe-Vektors mit einer Schlüsselmatrix. Der Eingabe-Vektor umfasst die gleiche Anzahl Daten-Elemente und Maskierungs-Elemente. Durch die Schlüsselmatrix ist der Schlüssel dargestellt. Die Multiplikation des Eingabe-Vektors mit der Schlüsselmatrix erfolgt in einer NTT-Implementierung, in welcher die Daten-Elemente und die Maskierungs-Elemente mit durch das kryptographische Verfahren vorbestimmten Potenzen des Schlüssels multipliziert werden. Das Verfahren ist dadurch gekennzeichnet, dass mindestens eines, oder einige, der Maskierungs-Elemente, mit Ausnahme von wenigstens einem einzelnen Maskierungs-Element, gezielt auf Null festgesetzt sind.

Durch die Maßnahme, dass einige Maskierungselemente (mindestens eines) auf Null gesetzt sind, entfällt in manchen NTT-Rechenschritten die Berechnung, da eine Multiplikation mit Null zu Grunde liegt. Dadurch wird die Laufzeit des Verfahrens reduziert und somit verbessert. Der Grenzfall dieser Maßnahme wäre, alle Maskierungselemente Null zu setzen. Dies hätte zwar die bestmögliche Laufzeitreduzierung zur Folge, aber andererseits auch, dass die Maskierung ganz entfällt. Daher wird mindestens ein Maskierungselement ungleich Null gesetzt.

Aufgrund der Architektur des NTT-Verfahrens haben die auf Null gesetzten Maskierungswerte nur am Anfang des Verfahrens, beim ersten NTT-Rechenschritt, unmaskierte Datenelemente zur Folge. Im weiteren Verlauf des Verfahrens, bei nachfolgenden NTT-Rechenschritten, werden durch die NTT-Rechenschritte unterschiedliche am Eingang des Verfahrens parallel eingegebene Datenelemente miteinander vermischt. Dadurch werden unmaskierte Datenelemente mit maskierten Datenelementen vermischt, so dass die Maskierung über die bereits maskierten Datenelemente auch auf die in vorhergehenden Rechenschritten unmaskiert gebliebenen Datenelemente ausgedehnt wird.

Folglich bleibt eine ausreichende Maskierung und damit Sicherheit des Verfahrens erhalten, obwohl einige Maskierungselemente Null gesetzt werden.

Daher ist gemäß Anspruch 1 ein laufzeitverbessertes und zugleich sicheres maskiertes gitterbasiertes kryptographisches Verfahren zur Verschlüsselung oder Entschlüsselung von Daten mit einem Schlüssel geschaffen.

Das Verfahren ist wahlweise als eines der folgenden ausgestaltet:

- ein Verfahren zur Verschlüsselung einer Nachricht mit einem Verschlüsselungs-Schlüssel, insbesondere öffentlichen Schlüssel, wobei die Nachricht oder ein von der Nachricht abgeleitetes Element als Daten-Elemente in dem Eingabe-Vektor vorgesehen ist und der Verschlüsselungs-Schlüssel oder ein vom Verschlüsselungs-Schlüssel abgeleiteter Schlüssel als Schlüssel vorgesehen ist;

- ein Verfahren zur Entschlüsselung eines durch Verschlüsselung einer Nachricht erzeugten Ciphertext mit einem Entschlüsselungs-Schlüssel, insbesondere privaten Schlüssel, wobei der Ciphertext oder ein vom Ciphertext abgeleitetes Element als Daten-Elemente in dem Eingabe-Vektor vorgesehen ist und der Entschlüsselungs-Schlüssel oder ein vom Entschlüsselungs-Schlüssel abgeleiteter Schlüssel als Schlüssel vorgesehen ist;

- ein Verfahren zur Signaturerzeugung durch ein Verfahren zur Entschlüsselung;

- ein Verfahren zur Signatur-Verifizierung durch ein Verfahren zur Verschlüsselung.

Ein erfindungsgemäßes Sicherheitselement enthält eine darin eingerichtete Implementierung eines maskierten gitterbasierten kryptographischen Verfahrens. Die Implementierung ist dazu eingerichtet, ein vorstehend beschriebenes Verfahren auszuführen.

Das Sicherheitselement ist wahlweise gestaltet als eines der folgenden:

- Teilnehmeridentitätsmodul, SIM, eingerichtet in einem eUICC zur Kommunikation in einem Mobilfunknetz;

- integrierter Schaltkreis, eingerichtet in einer Zahlungsverkehrskarte;

- integrierter Schaltkreis, eingerichtet in einem Identifikationsdokument;

- integrierter Schaltkreis, eingerichtet in eine Gesundheitssystemdokument.

Das Sicherheitselement ist wahlweise in einem Sicherheitsdokument integriert, welches wahlweise gestaltet als eines der folgenden: Zahlungsverkehrskarte, eUICC, Identifikationsdokument oder Gesundheitssystemdokument (insbesondere Krankenversichertenkarte oder Heilberufsausweis).

Ein Terminal ist eingerichtet zur Kommunikation mit einem obenstehend beschriebenen Sicherheitselement oder Sicherheitsdokument.

Kurze Beschreibung der Zeichnungen

Im Folgenden wird die Erfindung an Hand von Ausführungsbeispielen und unter Bezugnahme auf die Zeichnung näher erläutert, in der zeigen:

Fig. 1     eine NTT-Implementierung in DIF ("Decimation in Frequency") Darstellung, geeignet für die Anwendung der Erfindung;

Fig. 2     eine NTT-Implementierung in DIT ("Decimation in Time") Darstellung, geeignet für die Anwendung der Erfindung;

Fig. 3     die Multiplikation eines Eingabe-Vektors x mit einer Matrix um einen Ausgabe-Vektor X zu erzeugen.

Detaillierte Beschreibung von Ausführungsbeispielen

Das erfindungsgemäße Verfahren gemäß einer Ausführungsform des Verfahrens ist zur Verschlüsselung oder Entschlüsselung von Daten mit einem Schlüssel s eingerichtet. Das Verfahren umfasst eine Multiplikation eines Eingabe-Vektors u' mit einer Schlüsselmatrix $\hat{s}^T$. Der Eingabe-Vektor umfasst u' n Daten-Elemente $u0, \ldots, un-1$ und n Maskierungs-Elemente $r0, \ldots, rn-1$. Durch die Schlüsselmatrix $\hat{s}^T$ ist der Schlüssel s dargestellt. Die Multiplikation des Eingabe-Vektors u' mit der Schlüssel-matrix $\hat{s}^T$ erfolgt in einer NTT-Implementierung, in welcher die Daten-Elemente $u0, \ldots, un-1$ und die Maskierungs-Elemente $r0, \ldots, rn-1$ mit durch das kryptographische Verfahren vorbestimmten Potenzen des Schlüssels s multipliziert werden. Das Verfahren ist dadurch gekennzeichnet, dass mindestens eines, oder einige, der Maskierungs-Elemente $r0, \ldots, rn-1$, mit Ausnahme von wenigstens einem einzelnen Maskierungs-Element ri, gezielt auf Null festgesetzt sind.

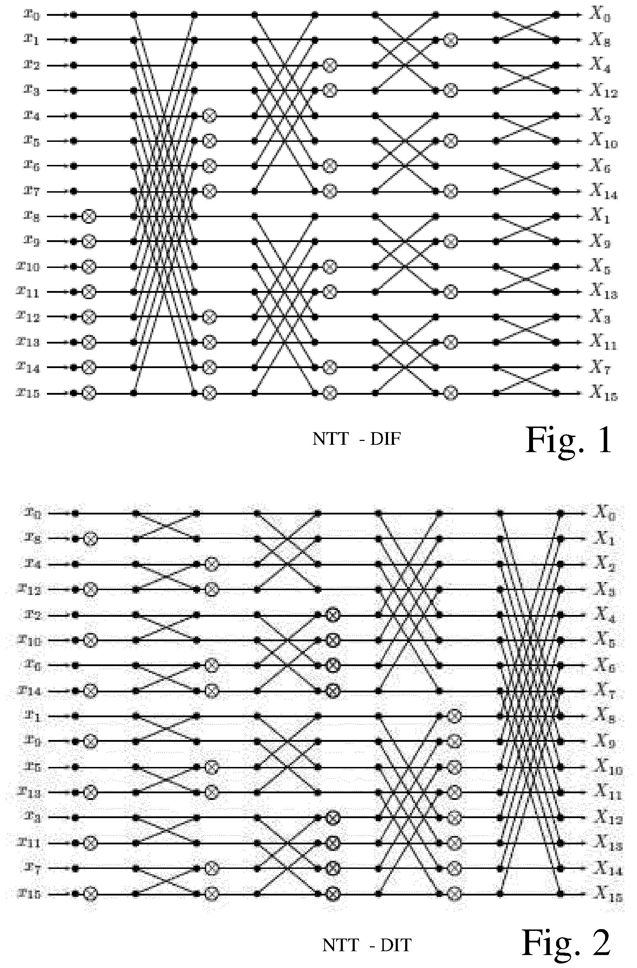

Fig. 1 zeigt eine NTT-Implementierung in DIF ("Decimation in Frequency", ins Deutsche übertragen: Dezimierung im Frequenzraum) Darstellung, geeignet für die Anwendung der Erfindung. Das Operationssymbol x im Kreis steht für die Multiplikation des von links eingespeisten Werts mit einer Potenz einer primitiven Einheitswurzel $\alpha$. Die Einspeisung der primitiven Quadratwurzeln an den Operationssymbolen $x$ im Kreis entspricht der Multiplikation mit der Matrix $\hat{\alpha}^T$ wie sie in Fig. 3 dargestellt ist. Die primitive Einheitswurzel $\alpha$ ist im Anwendungsfall einer Entschlüsselung mit einem geheimen Schlüssel gleich dem geheimen Schlüssel s.

Wird Algorithmus 1 aus der vorliegenden Anmeldung, gemäß einer Ausgestaltungsmöglichkeit, in den Vektor $x0, \ldots, x15$ aus Fig. 1 eingesetzt, so ergibt sich $x0, \ldots, x7, x8, \ldots, x15 = u0, \ldots, un-1, r0, \ldots, rn-1$. Die von links in Fig. 1 eingespeisten Werte sind also in den oberen acht Vektorelementen $x0, \ldots, x7$ der vom Ciphertext abgeleitete Wert u, also Daten-Elemente $u0, \ldots, un-1$, und in den unteren acht Vektorelementen $x8, \ldots, x15$ die zur Maskierung eingeführte Zufallszahl r, also Maskierungs-Elemente $r0, \ldots, rn-1$.

Jedes einzelne der Daten-Elemente u0, ... , un-1 und jedes einzelne der Maskierungs-Elemente r0, ..., rn-1 ist mit einer Potenz des Schlüssels s zu multiplizieren. Die anzuwendende Potenz ist aus Fig. 3 ersichtlich, wobei $\alpha$ aus Fig. 3 gleich dem Schlüssel s ist.

Werden nun einige der Maskierungs-Elemente r0, ..., rn-1 Null gesetzt, so muss für diese auf Null gesetzten Maskierungs-Elemente r0, ..., rn-1 keine Multiplikation durchgeführt werden, da das Ergebnis der Multiplikation ohnehin Null ist.

Werden in Fig. 1 die Vektorelemente x0 bis x7 am Eingang (links) auf die Werte der Datenelemente ui gesetzt, und die Vektorelemente x8 bis x15 der Maskierungselemente ri am Eingang (ebenfalls links) alle Null Werte gesetzt, so erfolgt keine Maskierung. Wird hingegen ein einziges Maskierungselement, beispielsweise x8, ungleich Null gesetzt, und die Maskierungswerte x9 ... x15 auf Null gesetzt, so wird im ersten NTT-Schritt, am ersten x im Kreis, für den Maskierungswert x8 ein Wert ungleich Null erzeugt, der dem ersten Datenelement x0 hinzugefügt wird. Für alle anderen Maskierungselemente x9 ... x15 wird im ersten NTT-Schritt ein Wert gleich Null erzeugt, so dass die Datenelemente x1 ... x7 im ersten NTT-Schritt unmaskiert bleiben. Im nächsten NTT-Schritt wird das mit x8 maskierte Datenelement x0 mit dem Datenelement x4 zusammengeführt, so dass nun also bereits x0 und x4 maskiert mit x8 sind. Im nächsten NTT-Schritt wird ausgehend vom Datenelement x0 das Datenelement x2 mit x8 maskiert, und ausgehend vom Datenelement x4 das Datenelement x6 mit x8 maskiert. Auch wenn Maskierungselement Null gesetzt werden, durchdringt die Maskierung auf Grund der Struktur des NTT-Verfahrens auch Datenelemente die am Eingang des Verfahrens unmaskiert geblieben sind.

Werden im Beispiel aus Fig. 2 die Vektorelemente x0, x4, x2, x6, x1, x5, x3, x7 auf die Datenelemente ui gesetzt, und von den übrigen, für die Maskierung eingerichteten Vektorelementen ri einige Null gesetzt, und mindestens eines ungleich Null gesetzt, so verbleiben zwar nach dem ersten NTT-Rechenschritt unmaskierte Daten-elemente ui, die aber im weiteren Verlauf des NTT-Verfahrens maskiert werden.

Zitierter Stand der Technik

[1] Erdem Alkim u. a. "NewHope - Submission to the NIST post-quantum project". In: (10. Apr. 2020). url: https://www.newhopecrypto.org/ data/NewHope_2020_04_10.pdf.

[2] Roberto Avanzi u. a. "CRYSTALS-Kyber (version 3.01) - Submission to round 3 of the NIST post-quantum project". In: (31. Jan. 2021). url: https : / / pq - crystals . org / kyber / data / kyber - specification - rou nd3-20210131. pdf.

[3] Léo Ducas u. a. "CRYSTALS-Dilithium - Algorithm Specifications and Supporting Documentation (Version 3.1)". In: (8. Feb. 2021). url: https: / / pq - crystals . org / dilithium / data / dilithium - specification - rou nd3-20210208. pdf.

[4] Louis Goubin und Jacques Patarin. "DES and Differential Power Analysis The "Duplication" Method". In: Cryptographic Hardware and Embedded Systems. Hrsg. von Cetin K. Koc und Christof Paar. Berlin, Heidelberg: Springer Berlin Heidelberg, 1999, S. 158-172. isbn: 978-3-540-48059-4.

[5] Douglas L. Jones. Digital Signal Processing - A User's Guide. Kap. 3.4.2.2 Decimation-in-frequency (DIF) Radix-2 FFT. url: https://cnx.org/ contents/-qAa9OhlP@2.44:XaYDVUAS@6/Decimation- in-Frequency-DIF-Radix-2-FFT.

[6] Douglas L. Jones. Digital Signal Processing - A User's Guide. Kap. 3.4.2.1 Decimation-in-time (DIT) Radix-2 FFT. url: https://cnx.org/contents/ qAa9OhlP@2.44:zmcmahhR@7/Decimation-in-time-DIT-Radix-2-FFT.

[7] Paul Kocher, Joshua Jaffe und Benjamin Jun. "Differential Power Analysis". In: Advances in Cryptology - CRYPTO' 99. Hrsg. von Michael Wiener. Berlin, Heidelberg: Springer Berlin Heidelberg, 1999, S. 388-397. isbn: 978-3-540-48405-9. url: https://doi.org/10.1007/3-540-48405-1_25.

[8] DE102018108313A1

[9] "Fast and Power-Analysis Resistant Ring Lizard Crypto-Processor Based on the Sparse Ternary Property", P. Choi et al, IEEE Access, 7. August 2019.

Patentansprüche

1.  Maskiertes gitterbasiertes kryptographisches Verfahren zur Verschlüsselung oder Entschlüsselung von Daten mit einem Schlüssel s, umfassend eine Multiplikation eines Eingabe-Vektors (u') mit einer Schlüsselmatrix ($\hat{s}T$),

    - wobei der Eingabe-Vektor (u') als Daten n Daten-Elemente ($u_0$, ..., $u_{n-1}$) konkateniert mit n Maskierungs-Elemente ($r_0$, ..., $r_{n-1}$) umfasst,
    - wobei durch die Schlüsselmatrix $\hat{s}^T$ der Schlüssel s dargestellt ist,
    - wobei die Multiplikation des Eingabe-Vektors (u') mit der Schlüsselmatrix ($\hat{s}^T$) in einer NTT-Implementierung erfolgt, in welcher die Daten-Elemente ($u_0$, ..., $u_{n-1}$) und die Maskierungs-Elemente ($r_0$, ..., $r_{n-1}$) mit durch das kryptographische Verfahren vorbestimmten Potenzen des Schlüssels s multipliziert werden, und
- wobei mindestens eines, oder einige, der Maskierungs-Elemente ($r_0$, ..., $r_{n-1}$), mit Ausnahme von wenigstens einem einzelnen Maskierungs-Element ($r_i$), gezielt auf Null festgesetzt ist bzw. sind.

2. Verfahren nach Anspruch 1, wobei das Verfahren eines der folgenden ist:

   - ein Verfahren zur Verschlüsselung einer Nachricht mit einem Verschlüsselungs-Schlüssel, insbesondere öffentlichen Schlüssel, wobei die Nachricht oder ein von der Nachricht abgeleitetes Element als Daten-Elemente in dem Eingabe-Vektor vorgesehen ist und der Verschlüsselungs-Schlüssel oder ein vom Verschlüsselungs-Schlüssel abgeleiteter Schlüssel als Schlüssel vorgesehen ist;
   - ein Verfahren zur Entschlüsselung eines durch Verschlüsselung einer Nachricht erzeugten Ciphertext mit einem Entschlüsselungs-Schlüssel, insbesondere privaten Schlüssel, wobei der Ciphertext oder ein vom Ciphertext abgeleitetes Element als Daten-Elemente in dem Eingabe-Vektor vorgesehen ist und der Entschlüsselungs-Schlüssel oder ein vom Entschlüsselungs-Schlüssel abgeleiteter Schlüssel als Schlüssel vorgesehen ist;
   - ein Verfahren zur Signaturerzeugung durch ein Verfahren zur Entschlüsselung;
   - ein Verfahren zur Signatur-Verifizierung durch ein Verfahren zur Verschlüsselung.

3. Sicherheitselement, mit einer darin eingerichteten Implementierung, die dazu eingerichtet ist, ein Verfahren nach Anspruch 1 oder 2 auszuführen.

4. Sicherheitselement nach Anspruch 3, gestaltet als eines der folgenden:

   - Teilnehmeridentitätsmodul, SIM, eingerichtet in einem eUICC zur Kommunikation in einem Mobilfunknetz;
   - integrierter Schaltkreis, eingerichtet in einer Zahlungsverkehrskarte;
   - integrierter Schaltkreis, eingerichtet in einem Identifikationsdokument;
   - integrierter Schaltkreis, eingerichtet in eine Gesundheitssystemdokument.

5. Sicherheitsdokument mit einem Sicherheitselement nach Anspruch 4, und gestaltet als eines der folgenden: Zahlungsverkehrskarte, eUICC, Identifikationsdokument oder Gesundheitssystemdokument.

6. Terminal eingerichtet zur Kommunikation mit einem Sicherheitselement nach Anspruch 4 oder/und zur Kommunikation mit einem Sicherheitsdokument nach Anspruch 5.

## Claims

1. Masked grating-based cryptographic method for encrypting or decrypting data using a key s, comprising multiplying an input vector (u') by a key matrix ($\hat{s}^T$),

   - wherein the input vector (u') comprises, as data, n data elements ($u_0$, ..., $u_{n-1}$) concatenated with n masking elements ($r_0$, ..., $r_{n-1}$),
   - wherein the key s is represented by the key matrix $\hat{s}^T$,
   - wherein the input vector (u') is multiplied by the key matrix ($\hat{s}^T$) in an NTT implementation in which the data elements ($u_0$, ..., $u_{n-1}$) and the masking elements ($r_0$, ..., $r_{n-1}$) are multiplied by powers of the key s that are predetermined by the cryptographic method, and
   - wherein at least one, or some, of the masking elements ($r_0$, ..., $r_{n-1}$), with the exception of at least one single masking element ($r_i$), is or are intentionally set to zero.

2. Method according to Claim 1, wherein the method is one of the following:

   - a method for encrypting a message using an encryption key, in particular a public key, wherein the message or an element derived from the message is provided in the input vector as data elements and the encryption key or a key derived from the encryption key is provided as key;
   - a method for decrypting a ciphertext generated by encrypting a message using a decryption key, in particular a private key, wherein the ciphertext or an element derived from the ciphertext is provided in the input vector as data elements and the decryption key or a key derived from the decryption key is provided as key;
   - a signature generation method using a decryption method;
   - a signature verification method using an encryption method.

3. Security element having an implementation set up therein that is configured to carry out a method according to Claim 1 or 2.

4. Security element according to Claim 3, designed as one of the following:

   - a subscriber identity module, SIM, set up in an eUICC for communication in a mobile telecommunications network;
   - an integrated circuit, set up in a payment card;

- an integrated circuit, set up in an identification document;
- an integrated circuit, set up in a health system document.

5. Security document having a security element according to Claim 4, and designed as one of the following: a payment card, an eUICC, an identification document or a health system document.

6. Terminal configured to communicate with a security element according to Claim 4 and/or to communicate with a security document according to Claim 5.

**Revendications**

1. Procédé cryptographique masqué à base de grille permettant de chiffrer ou de déchiffrer des données à l'aide d'une clé s, comprenant une multiplication d'un vecteur d'entrée (u') par une matrice de clé ($\widehat{S^T}$),

  - dans lequel le vecteur d'entrée (u') comprend en tant que données n éléments de données ($u_0$, ... $u_{n-1}$) concaténés avec n éléments de masquage ($r_0$, ..., $r_{n-1}$),
  - dans lequel la matrice de clé ($\widehat{S^T}$) représente la clé s,
  - dans lequel la multiplication du vecteur d'entrée (u') par la matrice de clé ($\widehat{S^T}$) est effectuée dans une implémentation NTT dans laquelle les éléments de données ($u_0$, ..., $u_{n-1}$) et les éléments de masquage ($r_0$, ..., $r_{n-1}$) sont multipliés par des puissances de la clé s, prédéterminées par le procédé cryptographique, et
  - dans lequel au moins un ou certains des éléments de masquage ($r_0$, ..., $r_{n-1}$) à l'exception d'au moins un élément de masquage unique ($r_i$) est/sont de manière ciblée fixé(s) à zéro.

2. Procédé selon la revendication 1, dans lequel le procédé est l'un des suivants :

  - un procédé permettant de chiffrer un message avec une clé de chiffrage, en particulier une clé publique, dans lequel le message ou un élément dérivé du message est prévu en tant qu'élément de données dans le vecteur d'entrée, et la clé de chiffrage ou une clé dérivée de la clé de chiffrage est prévue en tant que clé ;
  - un procédé permettant de déchiffrer un ciphertext généré par le chiffrage d'un message avec une clé de déchiffrage, en particulier une clé privée, dans lequel le ciphertext ou un élément dérivé du ciphertext est prévu en tant qu'élément de données dans le vecteur d'entrée, et la clé de déchiffrage ou une clé dérivée de la clé de déchiffrage est prévue en tant que clé ;
  - un procédé de génération de signature par un procédé de déchiffrage ;
  - un procédé de vérification de signature par un procédé de chiffrage.

3. Élément de sécurité, avec une implémentation aménagée dans celui-ci qui est conçue pour exécuter un procédé selon la revendication 1 ou 2.

4. Élément de sécurité selon la revendication 3, configuré sous la forme d'un des éléments suivants :

  - un module d'identité d'abonné, SIM, aménagé dans une eUICC pour communiquer dans un réseau de téléphonie mobile ;
  - un circuit intégré, aménagé dans une carte de paiement ;
  - un circuit intégré, aménagé dans un document d'identification ;
  - un circuit intégré, aménagé dans un document d'un système de santé.

5. Document de sécurité, comprenant un élément de sécurité selon la revendication 4 et configuré sous la forme d'un des éléments suivants : carte de paiement, eUICC, document d'identification ou document d'un système de santé.

6. Terminal, aménagé pour communiquer avec un élément de sécurité selon la revendication 4 ou/et pour communiquer avec un document de sécurité selon la revendication 5.

NTT - DIF

Fig. 1

NTT - DIT

Fig. 2

$$\begin{pmatrix} X_0 \\ X_1 \\ \vdots \\ X_{n-1} \end{pmatrix} = \begin{pmatrix} 1 & 1 & 1 & \cdots & 1 \\ 1 & \alpha & \alpha^2 & \cdots & \alpha^{n-1} \\ 1 & \alpha^2 & \alpha^4 & \cdots & \alpha^{2(n-1)} \\ 1 & \alpha^3 & \alpha^6 & \cdots & \alpha^{3(n-1)} \\ \vdots & & & & \vdots \\ 1 & \alpha^{n-1} & \alpha^{2(n-1)} & \cdots & \alpha^{(n-1)^2} \end{pmatrix} \begin{pmatrix} x_0 \\ x_1 \\ \vdots \\ x_{n-1} \end{pmatrix}$$

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018108313 A1

**In der Beschreibung aufgeführte Nicht-Patentliteratur**

- **P. CHOI et al.** Fast and Power-Analysis Resistant Ring Lizard Crypto-Processor Based on the Sparse Ternary Property. *IEEE Access*, 07 August 2019
- **ERDEM ALKIM**. *NewHope - Submission to the NIST post-quantum project*, 10 April 2020, https://www.newhopecrypto.org/ data/NewHope_2020_04_10.pdf
- **ROBERTO AVANZI**. *CRYSTALS-Kyber (version 3.01) - Submission to round 3 of the NIST post-quantum project*, 31 January 2021, https : / / pq - crystals . org / kyber / data / kyber - specification - rou nd3-20210131. pdf
- **LÉO DUCAS**. *CRYSTALS-Dilithium - Algorithm Specifications and Supporting Documentation (Version 3.1)*, 08 February 2021, https : / / pq - crystals . org / dilithium / data / dilithium - specification - rou nd3-20210208. pdf
- DES and Differential Power Analysis The "Duplication" Method. **LOUIS GOUBIN** ; **JACQUES PATARIN**. Cryptographic Hardware and Embedded Systems. Springer, 1999, 158-172
- **DOUGLAS L. JONES**. *igital Signal Processing - A User's Guide. Kap. 3.4.2.2 Decimation-in-frequency (DIF) Radix-2 FFT*, https://cnx.org/ contents/-qAa9OhlP@2.44:XaYDVUAS@6/Decimation- in-Frequency-DIF-Radix-2-FFT
- **DOUGLAS L. JONES**. *Digital Signal Processing - A User's Guide. Kap. 3.4.2.1 Decimation-in-time (DIT) Radix-2 FFT*, https://cnx.org/contents/qAa9OhlP@2.44:zmcmahhR@7/Decimation-in-time-DIT-Radix-2-FFT
- Differential Power Analysis. **PAUL KOCHER** ; **JOSHUA JAFFE** ; **BENJAMIN JUN**. Advances in Cryptology - CRYPTO' 99. Springer, 1999, 388-397